# EUROPEAN PATENT APPLICATION

(11) **EP 1 492 037 A2**
(43) Date of publication of application: **29.12.2004**
(21) Application number: 04253767.0
(22) Date of filing: 23.06.2004
(51) Int. Cl.: G06F 17/30

(54) **Storage and retrieval of data**

(30) Priority: 23.06.2003 GB 0314625
(71) Applicant: The Power Generation Company Ltd, Coventry CV4 8LG (GB)
(72) Inventor: Jackson, Guy, Nottingham NG5 9QQ (GB)
(74) Representative: Harland, Linda Jane

(57) **Abstract**

In a method of providing a data set for real time reading and display, data is extracted from a relational database such as a geographical information system and the extracted data formatted into a plurality of data files formatted using a quad tree structure. The plurality of data files are arranged in directories which themselves use a quad tree structure. The resulting data set is compact and can include data representing geographical locations, the characteristics of objects at those locations and parameters for the display of the data. The data set can readily be updated and can provide greater functionality at the user interface than has been possible in the past.

## Description

Utility companies and other similar organisations have a need to view real time operations and installations, such as electricity networks, against standard geographical data such as that provided in the United Kingdom by the Ordnance Survey. This has been achieved using Geographic Information System ('GIS') software, for example, GIS software supplied under the trade mark 'Smallworld' by GE Network Solutions.

The invention relates to an improved system for storing and retrieving data in the context of such a GIS-based system.

Due to the high volumes of data involved in such systems, typically of the order of 50 to 200 Gb (depending on the type of data held and size of geographic area), GIS databases have been held mid-range servers such as Hewlett Packard HP N-Class servers. However, field staff and external contractors use GIS-based systems in the field at locations where there may be no network connections over which such servers can be accessed. For such users, data is either printed off and taken into the field or provided on CD for use with a lap-top. To cover the entire electricity network for which a utility company is responsible may involve a set of around 5-10 CDs. To reflect changes in installations and networks , the CDs may be replaced four times a year and, at any given time, may, therefore, be up to three months out of date.

We have appreciated that there is a need for a disk efficient, rapidly accessible and up-to-date means for storage of GIS data to support systems used by field staff of utility companies and the like organisations.

In accordance with a first aspect of the invention, there is provided a data set for real time reading and display, the data set comprising a plurality of data files containing data formatted using a quad tree structure, the plurality of data files being arranged in directories which themselves reflect the quad tree structure.

In further aspects, the invention provides a method for providing such a data set and software tools for providing a data set for real time reading and display and for reading and displaying data from such a data set.

Thus, the invention provides a mechanism for storing and displaying GIS data without using the high volume of disk space necessitated by existing systems, by extracting raw data from the GIS database and removing the need for it to be viewed using the 'full' GIS system. Rather, it allows a simplified viewer to be used to read or display data stored in the file/directory structure of the invention. Typically data which has previously required many CDs can be stored on a single DVD using the file/directory/data structure of the invention.

An embodiment of the invention will be described in detail, by way of example, with reference to the drawings, in which:
Figure 1 is a schematic overview of the system of the invention;
Figure 2 illustrates the directory/file structure of the invention;
Figure 3 illustrates the use of the object/geometry file; and
Figure 4 illustrates schematically an additional module for use with the invention containing user-specific directories and files.

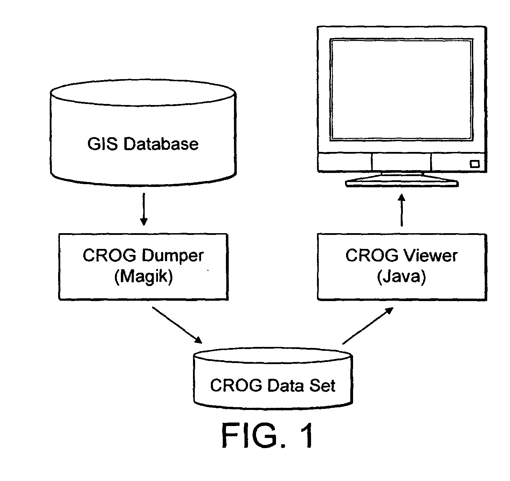

As can be seen from Figure 1, GIS data is supplied in the form of a GIS database by a commercial supplier, for example, the Smallworid database mentioned above. In previously available systems for use in the field, data from this database was extracted and distributed to users on compact discs in Calcomp plot file format (for vector data) and TIF format (for the raster data used for display). 'Calcomp plot file format' is a file format designed for the plotting of vector data using a sequential file format.

In the system of the invention, data is extracted from the GIS database using a software tool designated in this document the 'CROG dumper'. This tool is, in this example, written in GE Smallworld 'Magik' programming language as an add-on package to the GE Smallworld package. It will be appreciated that although, typically, data is extracted from a GIS database, other data sources might be used in other contexts.

The purpose of the GROG Dumper is to convert data from the GIS database into the file format of the invention, here designated Compressed Read Only Graphics ('CROG') format. This format will be described in greater detail below. The CROG Dumper is run periodically as a batch process to generate the CROG data.

The following data is extracted by the dumper and retained in CROG format:
- Object and geometry internal and external names
- Geometry - Area, chain, point, monochrome (general) raster, simple_area, simple_chain, simple_point.
- Object IDs
- Scale thresholds (ACE)
- Scale dependent visibilities (ACE)
- Scale dependent styles (Style)
- World units

The following information can additionally be configured using Magik in the dumper and may be included in the CROG data set:
- Hierarchical object groupings
- Visibility dependencies
- Print formats
- Warnings areas

The CROG formatted data can then be supplied to field operatives for use where no network connections are available and can be viewed by means of a CROG viewer; a software tool which can interrogate the data and display it on, for example, a lap-top screen.

The CROG file format is achieved by grouping data extracted from the GIS database using a quad tree data structure.

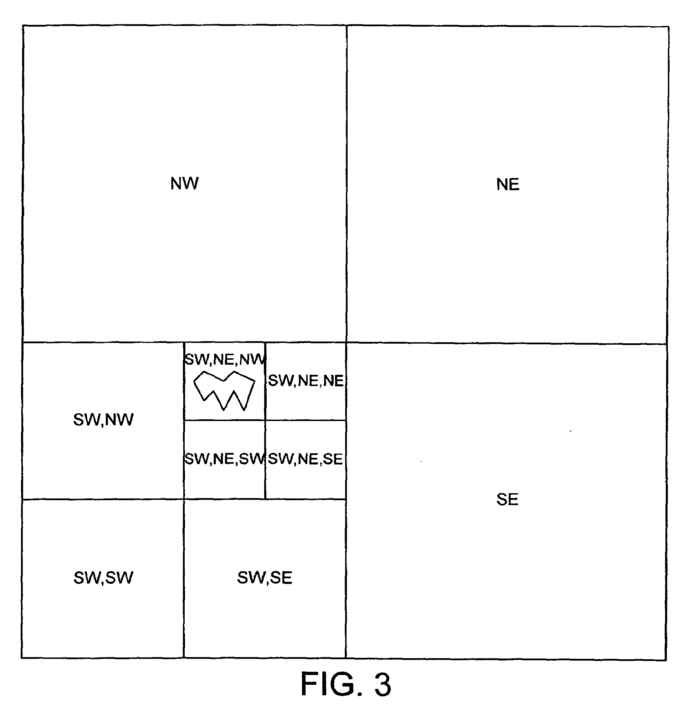

A quad tree is a tree-like data structure in which each node is either a 'leaf', containing useful information, or branches into four sub-level quad tree structures. In a standard quad tree structure, graphical elements are indexed or located based on the spatial coordinates of the element relative to a notional grid. This is illustrated in Figure 3 of the drawings.

The grid is constructed by drawing a square surrounding all the locations to be included and dividing this into four smaller squares and then dividing each of these, recursively into four smaller squares until a predefined minimum square size. The indexing of an element is based in the smallest square in which the graphical element wholly resides.

Thus, as can be seen from Figure 3, the four quadrants within the basic square can be designated NW, NE, SW and SE. Each smaller quadrant within the SW square can be referenced by identifying the primary and secondary quadrants in which it falls, SW,NW - SW,NE - SW, SW and SW,SE. An object can thus be located by a succession of quadrant identifiers, each relating to a smaller square. The object shown in Figure 3 is indexed by the location SW,NE,NW. It will be appreciated that this structure permits the data to be read at varying levels of detail simply by discarding one or more quadrant identifier from the least significant part of the index. On a coarse scale, the object Figure 3 can be located by using simply the first two identifiers - SW,NE. Where a more precise definition of the location is required, more detail is provided by reading the full index - SW,NE,NW.

In addition to a location index, each object in the CROG data set also 'knows' what kind of object/geometry it is, for example, it may be identified as a cable location, a joint annotation or some other kind of larger scale object such as a substation.

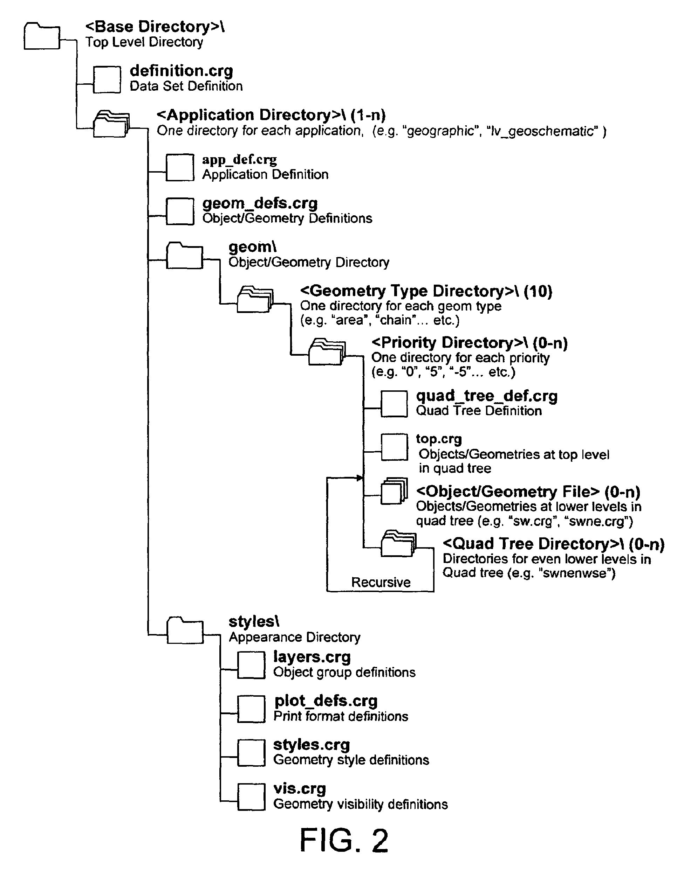

The quad tree structure is also applied to the CROG file/directory structure, as can be seen from Figure 2. The files and directories within this structure are as follows:
*Base Directory* - the whole of the CROG data set is stored in a tree structure below this top-level base directory. It will contain a sub-directory for each application (or world).
*Data Set Definition File* ("definition.crg") - this contains information such as the data creation date and a list of the applications (or worlds) contained within the data set.
*Application (World) Directory* - this directory contains data relating to a particular application (or world). The name of the directory will reflect the name of the world (e.g. "geographic"). Currently, the third party implementation contains one such directory ("geographic") and the EME internal implementation contains two ("geographic" & "Iv_geoschematic").
*Application Definition File* ("app_def.crg") - this file contains information such as the application name, world bounds and unit factor.
*Object*/*Geometry Definition File* ("geom_defs.crg") - each object/geometry has an object category ("cable", "joint", etc.) and a geometry category ("location", "annotation", etc.). This file defines each category in terms of a unique integer identifier, an internal name and an external name. Also, for each geometry category, it describes such things as the type ("point", "chain", "area", etc.), and the integer priority (scan order).
*Object*/*Geometry Directory* ("geom") - this directory contains all of the objects/geometry for the application (or world). It will contain a sub-directory for each geometry type ("chain", "point", "area", "text", etc.).
*Geometry Type Directory* - there is one of these sub-directories for each geometry type ("chain", "area", "simple_point", etc.). Each directory will contain all objects/geometry of that type.
*Priority Directory* - this is the top-level directory for a quad tree. The name of the directory is based on the integer priority to which the quad tree relates. (e.g. "0","15", "-10", etc.).
*Quad Tree Definition File* ("quad_tree_def.crg") - this file describes the structure of the quad tree for this priority. Parameters define the bounds of the overall coverage, the minimum quad tile size, the quad tile overlap factor and the number of quad levels per directory.
*Quad Tree Top Level Object*/*Geometry File* ("top.crg") - this file is a standard object/geometry file, that contains all objects/geometry that fall into the top-level quad tree tile. These will generally be objects with a very large coverage.
*Object*/*Geometry File -* in a typical data set, there will be many (maybe tens of thousands) of these files. They contain the actual objects and geometry.
   Each object/geometry is stored in a file with other objects that fall in the same quad tile. The path name of this file reflects the location of the quad tile within the quad tree structure. This is best illustrated by reference to the example of Figure 3.

In the example of Figure 3 , the object falls into a quad tile that has a unique reference of SW, NE, NW (i.e. South West, North East, North West). The path name constructed from this will depend of the number of quad levels per directory defined in the quad_tree_def.crg file.

The following table illustrates the full path name for the file containing the example geometry, for various values of the number of quad levels per directory.

| Number of quad levels/directory | Full path name of file |
|---|---|
| 1 | .../SW/NE/NW.crg |
| 2 | .../SWNE/NW.crg |
| 3 | .../SWNENW.crg |

This flexibility allows a trade-off between the number of files per directory and the depth of the directory structure.

The higher level directory structure ensures that all geometry within a particular geometry file will have the same world, type and priority.
*Appearance Directory ("styles*/*")* - this is the holding directory for all data relating to the style and visibility of each geometry category defined in the object/geometry definition file (see above).
*Object Group Definitions* ("layers.crg") - this file defines a hierarchical structure for the objects/geometry. This structure is declared within the CROG Dumper configuration and then used within the CROG Viewer for functionality such as visibility switching.
*Print Format Definitions* ("plot.cfg") - this file contains a definition for each plot format. The plot formats are declared within the CROG Dumper configuration and then used with the CROG Viewer printing functionality. Each format definition declares aspects such as available scales and object visibility.
*Geometry Style Definitions* - this file defines the style ("colour", "thickness", "font", etc.) for each geometry category. The styles defined are scale dependent (i.e. Different styles can be defined for the various scale ranges).
*Geometry Visibility Definitions* ("vis.crg") - this file defines the scales at which each category is visible. The visibility defined is scale dependent (i.e. The visibility of a geometry can be defined for each scale range).

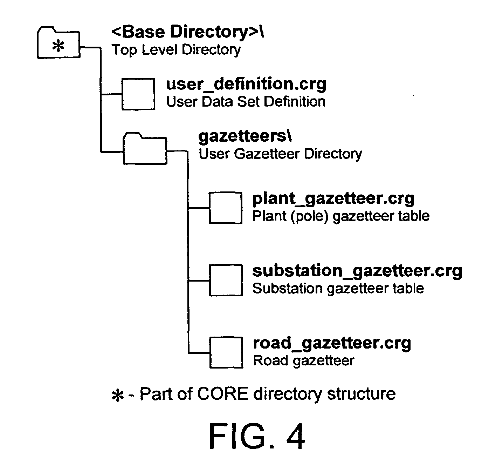

The files and directories outlined above are of general application and will be found in most if not all systems in accordance with the invention. It is, however, straightforward to incorporate into the system as a separate module user specific directories and files. This is illustrated in Figure 4, which shows the elements of the CROG directory/file structure which are specific to the user, in the example shown, an electrical utility company.
*User Data Set Definition File ("user_definition.crg")* - this contains information specific to the User Data Set, such as the data set version number and a flag indicating whether the data set is User or third party flavour.
*User Gazetteer Directory ("gazetteers\")* - this is the main holding directory for the User's gazetteer files.
*Plant (Pole) Gazetteer File ("plant_gazetteer.crg")* - this file contains a sorted table of records which cross-references pole names and PCMS IDs to the associated co-ordinates of the poles.
*Substation Gazetteer File ("substation_gazetteer.crg")* - this file contains a sorted table of records which cross-references substation names and PCMS IDs to the associated co-ordinates of the substations.
*Road Gazetteer File ("road_gazetteer.crg")* - this file contains a sorted table of records which cross-references road names and localities to the associated co-ordinates of the roads.

The resulting CROG data can be accessed and viewed in the field using a further software tool, the CROG viewer. It reads data from the CROG data set and allows the user to query, view and print the data. The viewer is, preferably a generic tool written, for example, using Java. The basic functionality can be included in the viewer
- Multiple worlds - Worlds are displayed as individual pages within the viewer.
- Viewing - Data is displayed using scale dependent styles and visibility.
- Query - The object ID, object type and geometry type can be determined by selecting an object from the main view.
- Printing - Data can be printed using the default format or fixed formats configured in the CROG dumper.

In addition, it is possible to incorporate user specific functionality, for example:
- Gazetteers - Plant (pole), substation and road.
- Active X Interface - This allows the CROG Viewer to be "driven" by another application.

The storage of data in flat files within the CROG data set rather than in a relational database means that the data can be accessed directly from the CROG viewer without the need for additional software/middleware.

The file structure also enables data to be grouped together into "layers" based on different detail levels. For example, features which would typically have a coverage of less than 1000 square meters (cables, substations, buildings etc.) would be assigned to a "detailed" layer, whereas much larger features (district boundaries, rivers etc.) would be assigned to an "overview" layer. By automatically switching different detail levels on and off at different scales, the CROG Viewer can access and display the data quickly and efficiently across a wide range of scales.

Since the GROG format has been developed with GIS data in mind, it is particularly suited to storing geometric and configuration data extracted from a GIS datastore. In particular, information such as style definitions (colour, fonts, line styles etc.) and visibility definitions (which features are visible at scales) can all be exported using the CROG format. This removes the requirement to reconfigure the information in the CROG Viewer.

The CROG file format allows the storage of 'objects', as described above, rather than simply 'dumb' graphics. For example, rather than simply storing a line, the CROG file format allows that line to be stored as a 'cable'. This means that CROG viewer can readily provide additional functionality to that available previously. In particular, the CROG data can be queried by means of the viewer; the user simply 'clicks' on the object to ask what it is. Further, the CROG viewer can be used to mark up changes to the data ('redlining') which has not been possible in existing systems.

As will be appreciated from the description above, the use of the quad tree structure adopted in the CROG file/directory/data format described above means that GIS data can be stored in an efficient and compact way. Since the format and interfaces are all under the same control, problems regarding version compatibility are avoided. If the basic GIS data is revised or reformatted then all that is necessary is to modify the CROG dumper to ensure that the data extracted from the GIS database is compatible with the viewer.

The format allows geometric data to be written to the data set without clipping. A single geometry in the GIS database is stored as a single geometry in the CROG data set.

The CROG format also facilitates the introduction of incremental updates to the CROG data by means of 'delta' files. Once an initial set of CROG data has been generated, future updates can be made by loading delta files containing changed data only. This avoids the need for a complete download of the CROG data when changes or updates are to be made, allowing much faster creation and distribution of CROG updates and allowing the CROG data set to be updated over a slow link such as a 56kb modem connection.

Insofar as security is concerned, it is anticipated that CROG GIS on a lap-top or pen-tablet will be used in conjunction with the standard XP Pro platform with all the usual forms of access control via password.

GIS up-dates sent by GSM, PSTN or GPRS mobile telephone or intemet technology will be sent in binary code which will make the data useless to unauthorised users. Many existing systems require the field devices to be brought back into the office for a database update. CROG can provide a complete online update mechanism for tracking changes within the corporate GIS; only changes are sent for update.

CROG GIS data can, furthermore, be developed to have a shelf-life, so that use of out of date data sets can be prevented. For example, data which is more than six months old can be made un-readable.

The CROG data Format, CROG Dumper and CROG Viewer have all been designed to be generic. Elements of the format and applications which are specific to particular users can be implemented as a separate module, as outlined above. This architecture should be beneficial if CROG is required to access data from other GIS databases.

The CROG Viewer is written in a standard language - JAVA - and is accessible within an intemet browser, making it transferable to other hardware platforms and environments.

## Claims

1. A data set for real time reading and display, the data set comprising a plurality of data files containing data formatted using a quad tree structure, the plurality of data files being arranged in directories which themselves use a quad tree structure.

2. A data set according to claim 1 wherein data within the data files includes data representing one or more geographical locations.

3. A data set according to claim 2 wherein data within the data files includes data representing characteristics of objects located at particular geographical locations.

4. A data set according to any preceding claim wherein data within the data files includes data representing parameters determining the appearance of a visual display of data within the or each file.

5. A data set according to any previous claim recorded on a machine readable medium.

6. A method of providing a data set for real time reading and display, the method comprising extracting data from a relational database, formatting the extracted data into a plurality of data files formatted using a quad tree structure and arranging the plurality of data files in directories which themselves use a quad tree structure.

7. A method according to claim 6 wherein data within the data files includes data representing one or more geographical locations.

8. A method according to claim 6 or 7 wherein data within the data files includes data representing characteristics of objects located at particular geographical locations.

9. A method according to any of claims 6, 7 or 8 wherein data within the data files includes data representing parameters determining the appearance of a visual display of data within the or each file.

10. A method according to any of claims 6 to 9 wherein the data set is recorded on a machine readable medium.

11. A software tool for providing a data set for real time reading and display, the tool comprising means for extracting data from a relational database, and means for formatting the extracted data into a plurality of data files formatted using a quad tree structure and for arranging the plurality of data files in directories which themselves use a quad tree structure.

12. A tool according to claim 11 including means for recording the data set on a machine readable medium.

13. A software tool for reading and displaying data from a data set in accordance with claim 1.
